# EUROPEAN PATENT APPLICATION

(11) **EP 4 404 523 A1**
(43) Date of publication of application: **24.07.2024**
(21) Application number: 24150754.0
(22) Date of filing: 08.01.2024
(51) Int. Cl.: H04L 41/142, H04L 41/16, H04L 41/342

(54) **USE OF SYNTHETIC TRAINING DATA**

(30) Priority: 18.01.2023 FI 20235049
(71) Applicant: Nokia Solutions and Networks Oy, 02610 Espoo (FI)
(72) Inventor: AGGARWAL, Chaitanya, 81373 Munich (DE); SUBRAMANYA, Tejas, 81539 Munich (DE); MONSHIZADEH, Mehrnoosh, 91180 Saint Germain les Arpajon (FR); KHATRI, Vikramajeet, 02610 Espoo (FI); HOJJATINIA, Sina, 91300 Massy (FR)
(74) Representative: Nokia EPO representatives

(57) **Abstract**

It may be that data collected, and retrieved, for a model training is not sufficient, and hence additional data may be needed. When it is determined that additional data is needed to complement the data retrieved, synthetic data is generated, and training data is obtained by combining the synthetic data with the data retrieved, and the model training is performed. A ratio of the synthetic data to the training data is determined and the ratio is indicated in a response to a request that caused the model to be trained.

## Description

### TECHNICAL FIELD

Various example embodiments relate to communication systems.

### BACKGROUND

Communication systems are under constant development. For example, a core network may be implemented using a service based architecture using different network functions. It is envisaged that machine learning techniques will be involved in various aspects of a telecommunications network, including access networks, core networks and operations, and administration and management systems.

### SUMMARY

The independent claims define the scope, and different embodiments are defined in dependent claims.

According to an aspect there is provided an apparatus comprising means for performing: receiving a request for a model training; retrieving first data for the model training; determining, whether additional data is needed to complement the first data; generating, upon determining that additional data is needed, synthetic data; obtaining training data by combining the synthetic data with the first data; determining a ratio of the synthetic data to the training data; performing the model training using the training data; and causing transmitting in a response to the request at least an indication of the ratio.

In embodiments, the means are further configured to determine whether the first data is imbalanced data, and in response to imbalanced data, determine that additional data is needed.

In embodiments, the means are further configured to determine whether the first data comprises sufficient amount of data for training, and in response to non-sufficient amount of data, determine that additional data is needed.

In embodiments, the means are further configured to perform: receiving in the request an upper limit for the ratio; and combining to the first data at most such an amount of synthetic data that the ratio does not exceed the upper limit.

In embodiments, the means are further configured to perform: receiving in the request an upper limit for the ratio; determining an amount of synthetic data needed; comparing the ratio to the upper limit; in response to the ratio exceeding the upper limit, performing the model training using the first data or not performing the model training; and causing transmitting in the response an indication that the upper limit was not met.

In embodiments, the means are further configured to perform causing storing the synthetic data with indication indicating that the data is synthetic.

In embodiments, the means are further configured to perform causing storing the model with information indicating analytics for which the model may be used.

In embodiments, the means are further configured to perform causing storing the model trained with the indication of the ratio.

According to an aspect there is provided an apparatus comprising means for performing: receiving a first request for analytics with an analytics identifier; causing transmitting, upon a trained model for the analytics identifier not being available, a second request of model training; receiving a response to the second request, the response containing a model trained and an indication of a ratio of synthetic data used in training the model; generating analytics using the model trained; determining confidence scores; and causing transmitting a response to the first request, the response containing the analytics with data statistics comprising the indication of the ratio and the confidence scores.

In embodiments, the means are further configured to perform: receiving in the first request an upper limit for the ratio; and transmitting the second request with the upper limit.

According to an aspect there is provided an apparatus comprising means for performing: causing transmitting a first request for analytics with an analytics identifier; receiving a response to the first request, the response containing the analytics with data statistics comprising an indication of a ratio of synthetic data used for obtaining the analytics and confidence scores; and determining, based at least on the indication of the ratio, whether or not to apply the analytics.

In embodiments, the means are further configured to add to the first request an upper limit for the ratio.

In embodiments, the apparatus comprises at least one processor, and at least one memory including computer program code, wherein the at least one processor with the at least one memory and computer program code provide said means.

According to an aspect there is provided a method comprising: receiving a request for a model training; retrieving first data for the model training; determining, whether additional data is needed to complement the first data; generating, upon determining that additional data is needed, synthetic data; obtaining training data by combining the synthetic data with the first data; determining a ratio of the synthetic data to the training data; performing the model training using the training data; and causing transmitting in a response to the request at least an indication of the ratio.

According to an aspect there is provided a method comprising: receiving a first request for analytics with an analytics identifier; causing transmitting, upon a trained model for the analytics identifier not being available, a second request of model training; receiving a response to the second request, the response containing a model trained and an indication of a ratio of synthetic data used in training the model; generating analytics using the model trained; determining confidence scores; and causing transmitting a response to the first request, the response containing the analytics with data statistics comprising the indication of the ratio and the confidence scores.

According to an aspect there is provided a method comprising: causing transmitting a first request for analytics with an analytics identifier; receiving a response to the first request, the response containing the analytics with data statistics comprising an indication of a ratio of synthetic data used for obtaining the analytics and confidence scores; and determining, based at least on the indication of the ratio, whether or not to apply the analytics.

According to an aspect there is provided a computer readable medium comprising program instructions stored thereon for at least one of a first functionality, a second functionality, or a third functionality, for performing corresponding functionality, wherein the first functionality comprises at least: causing transmitting a first request for analytics with an analytics identifier; receiving a response to the first request, the response containing the analytics with data statistics comprising an indication of a ratio of synthetic data used for obtaining the analytics and confidence scores; and determining, based at least on the indication of the ratio, whether or not to apply the analytics, wherein the second functionality comprises at least: receiving the first request for analytics with the analytics identifier; causing transmitting, upon a trained model for the analytics identifier not being available, a second request of model training; receiving a response to the second request, the response containing a model trained and the indication of a ratio of synthetic data used in training the model; generating the analytics using the model trained; determining the confidence scores; and causing transmitting the response to the first request, the response containing the analytics with the data statistics comprising the indication of the ratio and the confidence scores, wherein the third functionality comprises at least: receiving the second request for a model training; retrieving first data for the model training; determining, whether additional data is needed to complement the first data; generating, upon determining that additional data is needed, synthetic data; obtaining training data by combining the synthetic data with the first data; determining the ratio of the synthetic data to the training data; performing the model training using the training data; and causing transmitting in the response to the second request at least an indication of the ratio.

In an embodiment, the medium is a non-transitory computer readable medium.

According to an aspect there is provided a computer program comprising instructions for causing an apparatus to perform at least one of a first functionality, a second functionality, or a third functionality, wherein the first functionality comprises at least: causing transmitting a first request for analytics with an analytics identifier; receiving a response to the first request, the response containing the analytics with data statistics comprising an indication of a ratio of synthetic data used for obtaining the analytics and confidence scores; and determining, based at least on the indication of the ratio, whether or not to apply the analytics, wherein the second functionality comprises at least: receiving the first request for analytics with the analytics identifier; causing transmitting, upon a trained model for the analytics identifier not being available, a second request of model training; receiving a response to the second request, the response containing a model trained and the indication of a ratio of synthetic data used in training the model; generating the analytics using the model trained; determining the confidence scores; and causing transmitting the response to the first request, the response containing the analytics with the data statistics comprising the indication of the ratio and the confidence scores, wherein the third functionality comprises at least: receiving the second request for a model training; retrieving first data for the model training; determining, whether additional data is needed to complement the first data; generating, upon determining that additional data is needed, synthetic data; obtaining training data by combining the synthetic data with the first data; determining the ratio of the synthetic data to the training data; performing the model training using the training data; and causing transmitting in the response to the second request at least an indication of the ratio.

### BRIEF DESCRIPTION OF DRAWINGS

Embodiments are described below, by way of example only, with reference to the accompanying drawings, in which
Fig. 1 illustrates an exemplified high-level data-driven service-based network architecture;
Fig. 2 is a flow chart illustrating an example functionality;
Fig. 3 to Fig. 9 illustrate examples of request-response operations;
Fig. 10 and Fig. 11 are schematic block diagrams.

### DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the elements are not restricted by the terms. The terms are used merely for the purpose of distinguishing an element from other elements. For example, a first request could be termed a second request, and similarly, a second request could be also termed a first request without departing from the scope of the present disclosure.

To provide variety of services, such as enhanced mobile broadband, ultrareliable low latency communication, and massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification and blockchain technologies.

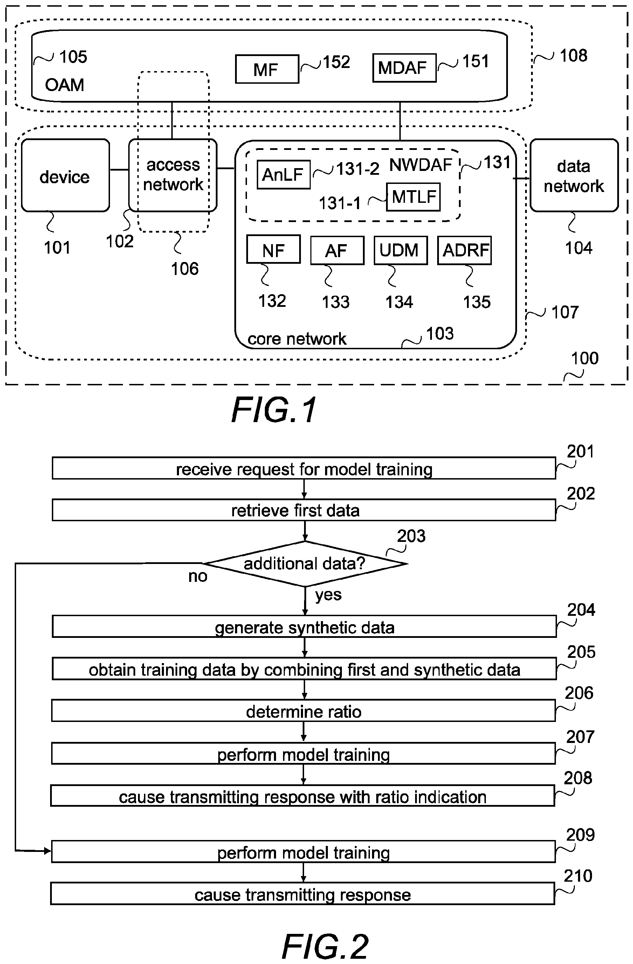

Fig. 1 illustrates an exemplified high-level cloud-native data-driven service-based network architecture only showing some functional entities, all being logical units, whose implementation may differ from what is shown. The connections shown in Fig. 1 are logical connections; the actual physical connections may be different.

The system 100 depicted in Fig. 1 is based on the 5G system, including the 5GC (5G core). The examples are described herein using principles and terminology of 5G core without limiting the examples, and the terminology used to the 5G core. A person skilled in the art may apply the solutions and examples to other communication systems, for example beyond 5G, provided with necessary properties. Further, is should be appreciated that only some operational entities and components, with a non-limiting example of their mapping, are disclosed.

The 5G system 100 is envisaged to use network functions virtualization, network slicing, network sharing, edge computing and software defined network, aiming to data driven network. The network functions virtualization allows network functions to be virtualized in a cloud environment. The 5G system 100 is based on standalone access networks and a standalone core network via which networks services, for example, can be delivered between devices and data networks, for example the internet. A device may be any electrical device connectable to an access network. The device may be a user equipment, a vehicle, an internet of things device, an industrial internet of things device, on-person device, like wearable device, just to mention few non-limiting examples. An access network may be any kind of an access network, such as a cellular access network, for example 5G-Advanced network, a non-terrestrial network, a legacy cellular radio access network, or a non-cellular access network, for example a wireless local area network.

Referring to Fig. 1, disaggregated, virtualized and software-based components comprise device components 101 for device functionalities in device domain, access network components 102 for access network functionalities in access network domain, a core network component 103 for core network functionalities in core network domain, data network components 104 for data network functionalities in data network domain, and an operations, administration and management (OAM) components 105 in OAM domain for component/domain management, operation support system functionalities and orchestration on various levels. Components (elements, functional units) of service based architecture are defined using network functions that may be cloudified network functions. A network function supports or hosts a collection of services and offers one or more services to other network functions in the network. The network functions may be deployed as microservices. A service consumer, or shortly a consumer, is a network function requesting a service from another network function, which is a service producer, or shortly a producer, that provides the service as a reply (response). It should be appreciated that the request-response operation covers herein similar operations, such as subscribe-notify operations.

The system 100 may comprise following platforms: an open radio access network (open RAN, O-RAN) 106, SA2 107 and SA5 108. The open radio access platform 106 may be called a radio intelligent controller (RIC), and it comprises a non-real-time part (non-RT RIC) and a near-real-time part (near-RT RIC). The non-real-time part may be part of service management and orchestration framework, and the near-real-time part may be on a radio access side. The purpose of both RICs is to optimize the RAN performance using machine learning agents running in the RICs. The SA2 platform 107 is a system architecture and services platform, and comprises machine learning - based services enablers for network automation. The SA5 platform 108 is a management, orchestration & charging intelligence and automation platform comprising, for example, machine learning management. It should be appreciated that machine learning covers herein also other artificial intelligence based solutions.

It is envisaged that training machine learning based models, at least for data analytics, will be performed in the 5G core network 103 by a network data analytics function (NWDAF) 131, and in the OAM by a management data analytics function (MDAF) 151.

The NWDAF 131 collects a wide range of data from devices (user equipment), different network functions (NF) 132, application functions (AF) 133, maintenance functions (MF) 152, and from unified data management (UDM) 134 relating to user data, and may use analytics data repository function (ADRF) to store data and to retrieve data from data repositories, for example for training purposes. The NWDAF 131 may be disaggregated into two separate logical entities: model training logical function (MTLF) 131-1, to train models, and analytics logical function (AnLF) 131-2 to produce analytic reports using models trained by the MTLF. The MTLF 131-1 may be in a central NWDAF whereas AnLFs may be in distributed edge NWDAFs, co-located with edge network functions.

The management data analytics function (MDAF) 151 and the NWDAF may cooperate with each other, for example the NWDAF may provide the MDAF with data for training purposes. The MDAF can be deployed at different levels, including at different domain levels (for example, RAN or core network) and at end-to-end level (for end-to-end assurance as part of the overall OAM, for example). The MDAF may also be disaggregated to a training consumer, e.g. analytics function(s), and a training producer, e.g. machine learning training function.

The above described functions that are training machine learning models (algorithms), or any corresponding functions, are configured (enhanced) to determine whether training data collected/retrieved requires additional data, generate synthetic data to complement the training data, and to indicate use of synthetic data as will be described in more detail. Consumers are also configured (enhanced) at least to receive the indications, as will be described in more detail. It should be appreciated that term "synthetic data" covers herein any artificially generated data, including simulated data.

Fig. 2 illustrates an example functionality of a model training function, or a model producer. For model training, any learning mode, for example offline and online training, can be used.

Referring to Fig. 2, when a request for a model training is received in block 201, for example for a specific analytics identified by an identifier, first data for the model training is retrieved in block 202. Depending whether disaggregated data analytics function is implemented or not, the request for a model training may be a request for model training from an analytics logical function (disaggregated implementation), or a request for a specific analytics, indirectly requesting for a model training. The data may be retrieved from one or more data repositories, for example by requesting the data from a repository function, e.g. the ADRF. Then it is determined in block 203, whether additional data is needed to complement the first data. For example, it may be determined whether the first data is imbalanced data, and in response to imbalanced data, it may be determined that additional data to complement the first data, i.e. to correct/overcome, at least partially, the imbalance in the training data, is needed for a more accurate training of the machine learning model. An example of imbalanced data is first data in which 90% of samples may belong to class X and 10% of samples belong to class Y. In this example, it may be determined that additional training data in class Y is needed in order to correct the imbalance in the data between the two classes for training the machine learning model. In addition to, or alternatively, a determination may be made whether the first data comprises sufficient amount of data for training the machine learning model, and in response to non-sufficient amount of data, it may be determined that additional data is needed in order to correct the deficiency in the amount of data. For example, the first data may comprise only 100 samples, which may be a non-sufficient amount of data for training the machine learning model, regardless whether it is imbalanced or not. In other words, in block 203, a determination may be made based on whether or not the first data is balanced data, or based whether or not the overall amount of the first data is sufficient, or based on both whether or not the first data is balanced data and whether or not the overall amount of the first data is sufficient, for example.

Upon determining that additional data is needed (block 203: yes), synthetic data is generated in block 204 and training data is obtained in block 205 by combining the synthetic data with the first data. Further, a ratio of the synthetic data to the training data is determined in block 206. The ratio may be amount of the synthetic data : amount of the first data, or amount of the first data : amount of the synthetic data, or amount of the synthetic data : amount of the training data (combined amount of the first data and the synthetic data), or amount of the training data : amount of the synthetic data. The ratio may be expressed in percentages, e.g. 20 %, or as a numerical ratio, e.g. 1:4. In some implementations, when no synthetic data is needed (block 203:no) and hence used, it may be indicated by using value zero or indefinite, or just by not having any indication of the ratio.

The model is trained in block 207 with the training data comprising the synthetic data, and transmitting at least an indication of the ratio is caused in block 208. The response may comprise, for example in the disaggregated implementation when the response is a response to the analytics function, also the model trained. Hence, the network function that transmitted the request for the model training, will receive an indication that synthetic data has been used, and an indication how much synthetic data was used, and is able to forward the indications to a network function that caused the request to be transmitted in the disaggregated implementation.

If there is no need for additional data (block 203: no), the training of the model is performed in block 209, and transmitting a response is caused in block 210. The response may comprise analytics results, or the model trained. Further, in some implementations the response may indicate that no synthetic data were used.

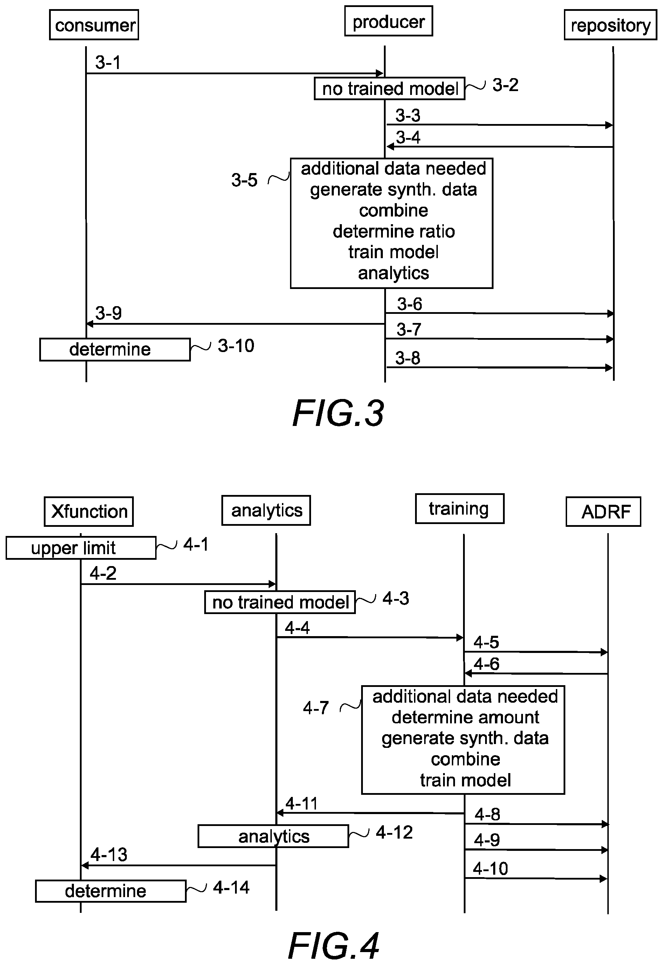

Fig. 3 to Fig. 9 depict different examples of request-response operations. In Fig. 3 a non-disaggregated implementation is used as an example, and in Fig. 4 to Fig. 9 a disaggregated implementation is used. For example, separate analytics functions, for example in edge cloud, and a centralized training function, may be used. In the examples illustrated in Fig. 3 to Fig. 9 it is assumed that there exists no trained model that could be used to provide the requested analytics and that additional data is needed. Further, in Fig. 4 to Fig. 9 it is assumed that a network function requesting analytics includes to its request an upper limit for the synthetic data.

In Fig. 3 the term "consumer" is used for a network function requesting specific analytics, and in Fig. 4 to Fig. 9, term "Xfunction" is used for the same purpose. For example, the consumer may be a network function in the 5G core network, or a management function, requiring analytics, or a machine learning training consumer. In Fig. 3, term "producer" is used for a function providing analytics, including training a machine learned based model that will be used to provide the requested analytics. The producer may be the MDAF or another machine learning producer in the SA5, or the NWDAF, for example. In Fig. 3, term "repository" is used to cover any data collected by any function, and a data retrieval function. In Fig. 4 to Fig. 9, term "analytics" is used for an analytics function, such as the AnLF, term "training" is used for a function training machine learning based models, such as the MTLF, and term "ADRF" is used for a repository function.

Referring to Fig. 3, the consumer is caused to transmit a request (message 3-1) for analytics with an analytics identifier, or corresponding information identifying the requested analytics. The request may be called an analytics request. The producer detects in block 3-2 that a trained model for the analytics identified is not available for the identified analytics, for example there is no such model or the model is outdated. Hence the producer retrieves the first data by sending a request for the first data (message 3-4) to the repository, for example to the ADRF and/or to other data collecting functions, and receives (message 3-5) the first data. Then the producer determines in block 3-5 that additional data is needed to complement the first data (for example, in order to correct an imbalance and/or non-sufficient amount in the first data, as described with block 203 of Fig. 2). Then synthetic data is generated in block 3-5(for example to correct the imbalance and/or non-sufficient amount in the first data), and training data is obtained in block 3-5 by combining the synthetic data with the first data. A ratio of the synthetic data to the training data is determined in block 3-5, and the model training is performed using the training data in block 3-5, for example as described with blocks 204 to 207 of Fig. 2. Further, the requested analytics are generated in block 3-5 using the model trained, including determining confidence scores for the analytics.

In the illustrated example, the producer further causes storing the synthetic data with indication indicating that the data is synthetic by transmitting a request (message 3-6) to the repository. In the illustrated example, the producer further causes storing the trained model with information indicating analytics for which the model may be used by transmitting a request (message 3-7) to the repository. The thus stored data may be used for generating synthetic data for the indicated analytics in case of data deficiency. In the illustrated example, the producer further causes storing the model trained with the indication of the ratio by transmitting a request (message 3-8) to the repository. The indication may be part of metadata of the trained model. In other example implementations it may be that one or two of the above described storing or all of them are omitted, i.e. one, two or all of messages 3-6 to 3-8 are not transmitted.

The producer further transmits a response (message 3-9) to the request to the consumer, the response containing the analytics with data statistics comprising the indication of the ratio and the confidence scores. Examples of the indication are given above with block 206 of Fig. 2. Hence, the consumer becomes aware of use of synthetic data and how much it has been used.

The consumer determines in block 3-9, based at least on the indication of the ratio, whether or not to apply the analytics. The consumer may use also other data statistics, such as the confidence score, to determine whether or not to apply the analytics.

Referring to Fig. 4, the Xfunction determines in block 4-1 an upper limit for the ratio of the synthetic data to the training data. The determining may comprise using a preset value for the upper limit, for example based on analytics that is to be requested, or confidence requirements for the analytics (the higher the confidence requirement, the less synthetic data may be used, for example). The ratio indicates the maximum amount of a threshold tolerated for the synthetic data. The thus determined upper limit is added to a first request for analytics. The upper limit may be added in a dataset statistical properties attribute field, for example. The Xfunction then transmits the first request (message 4-2) for analytics with an analytics identifier, or corresponding information identifying the requested analytics, and the upper limit to the analytics function. The first request may be called an analytics request.

In the illustrated example, the analytics function detects in block 4-3 that a trained model for the analytics identifier is not available for the identified analytics, and transmits a second request (message 4-4) to the training function. The second request is a request for a model training, the second request containing the analytics identifier and the upper limit. (In case the first request does not comprise the upper limit, the second request does not comprise the upper limit either.)

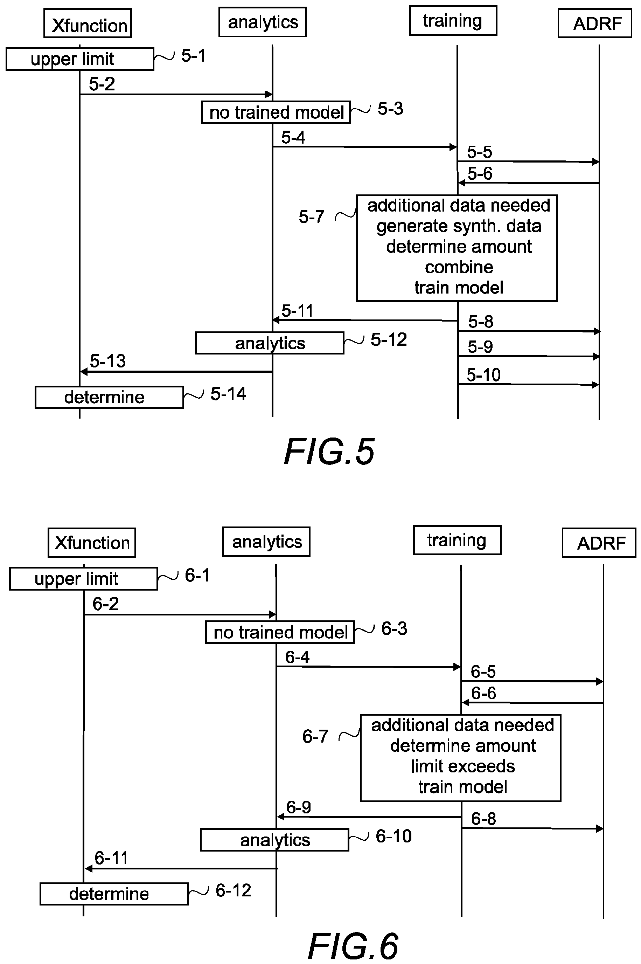

Upon receiving the second request (message 4-4), the training function retrieves first data. In the illustrated example, the first data is retrieved by sending a request for the first data (message 4-5) to the ADRF, or a corresponding function(s), by receiving (message 4-6) the first data from the ADRF. Then the training function determines in block 4-7 that additional data is needed to complement the first data. Synthetic data is generated in block 4-7, and training data is obtained in block 4-7 by combining the synthetic data with the first data. A ratio of the synthetic data to the training data is determined in block 4-7, and the model training is performed using the training data in block 4-7, for example as described with blocks 203 to 207 of Fig. 2. Before combining the training data, it is checked, whether the ratio will exceed the upper limit. Different examples and points when the checking may be performed are described with Fig. 5 to Fig. 9. In the illustrated example of Fig. 4 it is assumed that the ratio is below the upper limit.

In the illustrated example, the training function further causes storing the synthetic data with indication indicating that the data is synthetic by transmitting a request (message 4-8) to the ADRF, or a corresponding function(s). In the illustrated example, the training function further causes storing the trained model with information indicating analytics for which the model may be used by transmitting a request (message 4-9) to the ADRF, or a corresponding function(s). The thus stored data may be used for generating synthetic data for the indicated analytics in case of data deficiency. In the illustrated example, the training function further causes storing the model trained with the indication of the ratio by transmitting a request (message 4-10) to the ADRF, or a corresponding function(s). The indication may be part of metadata of the trained model. In other examples implementations it may be that one or two of the above described storing or all of them are omitted, i.e. one, two or all of messages 4-8 to 4-10 are not transmitted.

The model trained and an indication of the ratio is transmitted from the training function to the analytics function in a response (message 4-11), which is a response to the second request. The indication may be in a dataset statistical properties attribute field, which may comprise also other training data statistics.

The analytics function generates in block 4-12 analytics using the model trained, and determines confidence scores, and transmits to the Xfunction a response (message 4-13) to the first request, the response containing the analytics with data statistics comprising at least the indication of the ratio and the confidence scores.

The Xfunction determines in block 4-14, based at least on the indication of the ratio, whether or not to apply the analytics. For example, the Xfunction may doublecheck that the ratio does not exceed the upper limit, or may make the decision based on how close to the upper limit the ratio is. The Xfunction may use also other data statistics to determine whether or not to apply the analytics.

Referring to Fig. 5, the Xfunction determines in block 5-1 an upper limit for the ratio of the synthetic data to the training data. The determining may comprise using a preset value for the upper limit, for example based on analytics that is to be requested. The ratio indicates the maximum amount of a threshold tolerated for the synthetic data. The thus determined upper limit is added to a first request for analytics. The upper limit may be added in a dataset statistical properties attribute field, for example. The Xfunction then transmits the first request (message 5-2) for analytics with an analytics identifier, or corresponding information identifying the requested analytics, and the upper limit to the analytics function. The first request may be called an analytics request.

In the illustrated example, the analytics function detects in block 5-3 that a trained model for the analytics identifier is not available for the identified analytics, and transmits a second request (message 5-4) to the training function. The second request is a request for a model training, the second request containing the analytics identifier and the upper limit.

Upon receiving the second request (message 5-4), the training function retrieves first data. In the illustrated example, the first data is retrieved by sending a request for the first data (message 5-5) to the ADRF, or a corresponding function(s), by receiving (message 5-6) the first data from the ADRF. Then the training function determines in block 5-7 that additional data is needed to complement the first data, for example as described with block 203 of Fig. 2. In the illustrated example, synthetic data is generated in block 5-7.The training function determines in block 5-7 the amount of the synthetic data that may be combined to the first data without the ratio exceeding the upper limit. It should be appreciated that the amount of generated synthetic data may be smaller or bigger, and the determining the amount and the generating may happen in any order or in parallel. Then training data is obtained in block 5-7 by combining at most the amount of synthetic data determined with the first data. In other words, at most such an amount of synthetic data is combined to the first data that the ratio does not exceed the upper limit. Then a ratio of the synthetic data to the training data is determined in block 5-7, and the model training is performed using the training data in block 5-7, for example as described with blocks 206 and 207 of Fig. 2.

In the illustrated example, the training function further causes storing the synthetic data with indication indicating that the data is synthetic by transmitting a request (message 5-8) to the ADRF, or a corresponding function(s). In the illustrated example, the training function further causes storing the trained model with information indicating analytics for which the model may be used by transmitting a request (message 5-9) to the ADRF, or a corresponding function(s). The thus stored data may be used for generating synthetic data for the indicated analytics in case of data deficiency. In the illustrated example, the training function further causes storing the model trained with the indication of the ratio by transmitting a request (message 5-10) to the ADRF, or a corresponding function(s). The indication may be part of metadata of the trained model. In other examples implementations it may be that one or two of the above described storing or all of them are omitted, i.e. one, two or all of messages 5-8 to 5-10 are not transmitted.

The model trained and an indication of the ratio is transmitted from the training function to the analytics function in a response (message 5-11), which is a response to the second request. The indication may be in a dataset statistical properties attribute field, which may comprise also other training data statistics.

The analytics function generates in block 5-12 analytics using the model trained, and determines confidence scores, and transmits to the Xfunction a response (message 5-13) to the first request, the response containing the analytics with data statistics comprising at least the indication of the ratio and the confidence scores.

The Xfunction determines in block 5-14, based at least on the indication of the ratio, whether or not to apply the analytics. For example, the Xfunction may doublecheck that the ratio does not exceed the upper limit, or may make the decision based on how close to the upper limit the ratio is. The Xfunction may use also other data statistics to determine whether or not to apply the analytics.

Referring to Fig. 6, the Xfunction determines in block 6-1 an upper limit for the ratio of the synthetic data to the training data. The determining may comprise using a preset value for the upper limit, for example based on analytics that is to be requested. The ratio indicates the maximum amount of a threshold tolerated for the synthetic data. The thus determined upper limit is added to a first request for analytics. The upper limit may be added in a dataset statistical properties attribute field, for example. The Xfunction then transmits the first request (message 6-2) for analytics with an analytics identifier, or corresponding information identifying the requested analytics, and the upper limit to the analytics function. The first request may be called an analytics request.

In the illustrated example, the analytics function detects in block 6-3 that a trained model for the analytics identifier is not available for the identified analytics, and transmits a second request (message 6-4) to the training function. The second request is a request for a model training, the second request containing the analytics identifier and the upper limit.

Upon receiving the second request (message 6-4), the training function retrieves first data. In the illustrated example, the first data is retrieved by sending a request for the first data (message 6-5) to the ADRF, or a corresponding function(s), by receiving (message 6-6) the first data from the ADRF. Then the training function determines in block 6-7 that additional data is needed to complement the first data, for example as described with block 203 of Fig. 2. In the illustrated example, the training function then determines in block 6-7 the amount of the synthetic data that is needed, and detects, for example by comparing a ratio determined and the upper limit, that the ratio will exceed the upper limit. Therefore, in the illustrated example, no synthetic data is generated and the model training is performed using the first data in block 6-7.

In the illustrated example, the training function further causes storing the trained model with information indicating analytics for which the model may be used by transmitting a request (message 6-8) to the ADRF, or a corresponding function(s). The thus stored data may be used for generating synthetic data for the indicated analytics in case of data deficiency.

The model trained is transmitted from the training function to the analytics function in a response (message 6-9), which is a response to the second request. The response may indicate that not enough training data was used, and/or imbalanced training data was used, since the amount of required synthetic data would cause that the ratio would exceed the upper limit, for example by using zero or some negative value as an indication of the ratio. Such an indication may be in a dataset statistical properties attribute field, which may comprise also other training data statistics.

The analytics function generates in block 6-10 analytics using the model trained, and determines confidence scores, and transmits to the Xfunction a response (message 6-11) to the first request, the response containing the analytics with data statistics comprising at least the confidence scores, and possibly the indication, if the indication is received in message 6-9.

The Xfunction determines in block 6-12, whether or not to apply the analytics. The Xfunction may also return to block 6-1 to redetermine the upper limit.

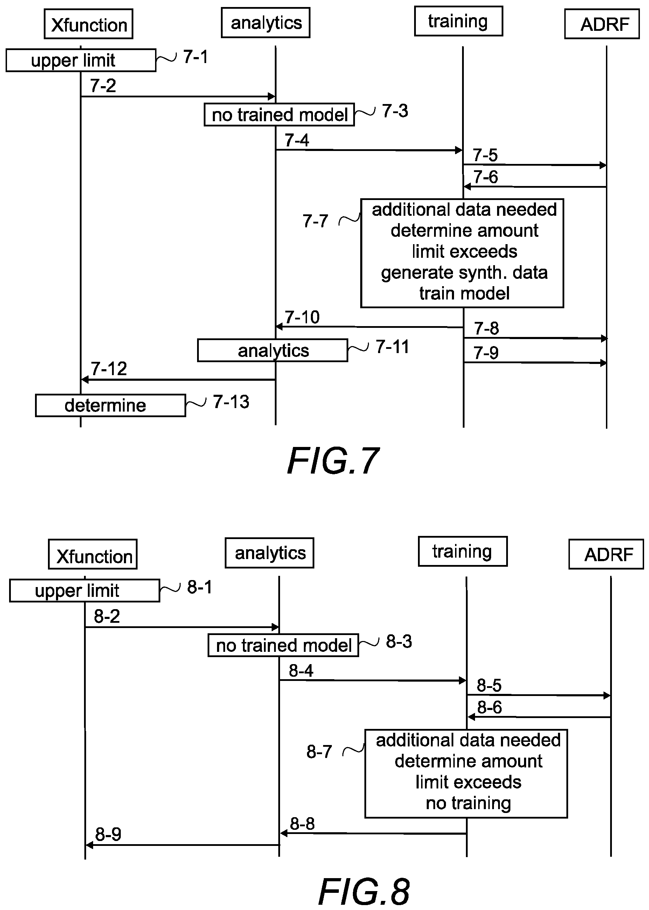

Referring to Fig. 7, the Xfunction determines in block 7-1 an upper limit for the ratio of the synthetic data to the training data. The determining may comprise using a preset value for the upper limit, for example based on analytics that is to be requested. The ratio indicates the maximum amount of a threshold tolerated for the synthetic data. The thus determined upper limit is added to a first request for analytics. The upper limit may be added in a dataset statistical properties attribute field, for example. The Xfunction then transmits the first request (message 7-2) for analytics with an analytics identifier, or corresponding information identifying the requested analytics, and the upper limit, to the analytics function. The first request may be called an analytics request.

In the illustrated example, the analytics function detects in block 7-3 that a trained model for the analytics identifier is not available for the identified analytics, and transmits a second request (message 7-4) to the training function. The second request is a request for a model training, the second request containing the analytics identifier and the upper limit.

Upon receiving the second request (message 7-4), the training function retrieves first data. In the illustrated example, the first data is retrieved by sending a request for the first data (message 7-5) to the ADRF, or a corresponding function(s), by receiving (message 7-6) the first data from the ADRF. Then the training function determines in block 7-7 that additional data is needed to complement the first data, for example as described with block 203 of Fig. 2. In the illustrated example, the training function then determines in block 7-7 the amount of the synthetic data that is needed, and detects, for example by comparing a ratio determined and the upper limit, that the ratio will exceed the upper limit. Therefore at most such an amount of synthetic data that the ratio will not exceed the upper limit is generated in block 7-7. Then training data is obtained in block 7-7 by combining synthetic data with the first data. In other words, at most such an amount of synthetic data is combined to the first data that the ratio does not exceed the upper limit. Then a ratio of the synthetic data to the training data is determined, or the upper limit is used as the ratio, and the model training is performed using the training data in block 7-7, for example as described with blocks 206 and 207 of Fig. 2.

In the illustrated example, the training function further causes storing the synthetic data with indication indicating that the data is synthetic by transmitting a request (message 7-8) to the ADRF, or a corresponding function(s). In the illustrated example, the training function further causes storing the trained model with information indicating analytics for which the model may be used by transmitting a request (message 7-9) to the ADRF, or a corresponding function(s). The thus stored data may be used for generating synthetic data for the indicated analytics in case of data deficiency. In other examples implementations it may be that one of the above described storing or both of them are omitted, i.e. one or both of messages 7-8 and 7-9 are not transmitted. In some other examples, the training function may further causes storing the model trained with the indication of the ratio by transmitting a request to the ADRF, or a corresponding function(s). The indication may be part of metadata of the trained model. The indication may be enhanced by an indication that due to the upper limit, the amount of synthetic data was limited.

The model trained and an indication of the ratio is transmitted from the training function to the analytics function in a response (message 7-10), which is a response to the second request. The indication may be in a dataset statistical properties attribute field, which may comprise also other training data statistics. The indication may be enhanced by an indication that due to the upper limit, the amount of synthetic data was limited.

The analytics function generates in block 7-11 analytics using the model trained, and determines confidence scores, and transmits to the Xfucntion a response (message 7-12) to the first request, the response containing the analytics with data statistics comprising at least the indication of the ratio and the confidence scores. The indication may be enhanced by the indication that due to the upper limit, the amount of synthetic data was limited.

The Xfunction determines in block 7-13, based at least on the indication of the ratio, whether or not to apply the analytics. For example, the Xfunction may doublecheck that the ratio does not exceed the upper limit, or may base the decision on how close to the upper limit the ratio is. The Xfunction may use also other data statistics to determine whether or not to apply the analytics.

Referring to Fig. 8, the Xfunction determines in block 8-1 an upper limit for the ratio of the synthetic data to the training data. The determining may comprise using a preset value for the upper limit, for example based on analytics that is to be requested. The ratio indicates the maximum amount of a threshold tolerated for the synthetic data. The thus determined upper limit is added to a first request for analytics. The upper limit may be added in a dataset statistical properties attribute field, for example. The Xfunction then transmits the first request (message 8-2) for analytics with an analytics identifier, or corresponding information identifying the requested analytics, and the upper limit to the analytics function. The first request may be called an analytics request.

In the illustrated example, the analytics function detects in block 8-3 that a trained model for the analytics identifier is not available for the identified analytics, and transmits a second request (message 8-4) to the training function. The second request is a request for a model training, the second request containing the analytics identifier and the upper limit.

Upon receiving the second request (message 8-4), the training function retrieves first data. In the illustrated example, the first data is retrieved by sending a request for the first data (message 8-5) to the ADRF, or a corresponding function(s), by receiving (message 8-6) the first data from the ADRF. Then the training function determines in block 8-7 that additional data is needed to complement the first data, for example as described with block 203 of Fig. 2. In the illustrated example, the training function then determines in block 8-7 the amount of the synthetic data that is needed, and detects, for example by comparing a ratio determined and the upper limit, that the ratio will exceed the upper limit. Therefore in the illustrated example, no model training is performed and a response (message 8-8) indicating a failure, for example, is transmitted from the training function to the analytics function. The response may be enhanced by an indication that due to the upper limit, the amount of synthetic data was limited, and hence no model was trained.

Upon receiving the response (message 8-8), the analytics function transmits to the Xfunction a response (message 8-9) to the first request, the response containing for example an indication of a failure, or that no analytics is available. The indication may be enhanced by the indication received that due to the upper limit, the amount of synthetic data was limited, and hence no model was trained.

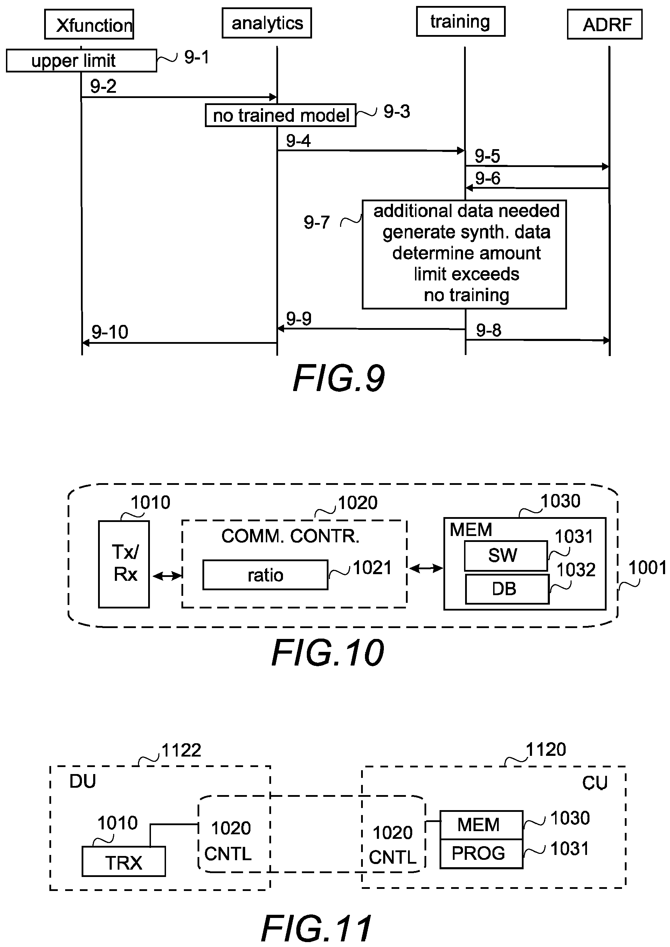

Referring to Fig. 9, the Xfunction determines in block 9-1 an upper limit for the ratio of the synthetic data to the training data. The determining may comprise using a preset value for the upper limit, for example based on analytics that is to be requested. The ratio indicates the maximum amount of a threshold tolerated for the synthetic data. The thus determined upper limit is added to a first request for analytics. The upper limit may be added in a dataset statistical properties attribute field, for example. The Xfunction then transmits the first request (message 9-2) for analytics with an analytics identifier, or corresponding information identifying the requested analytics, and the upper limit to the analytics function. The first request may be called an analytics request.

In the illustrated example, the analytics function detects in block 9-3 that a trained model for the analytics identifier is not available for the identified analytics, and transmits a second request (message 9-4) to the training function. The second request is a request for a model training, the second request containing the analytics identifier and the upper limit.

Upon receiving the second request (message 9-4), the training function retrieves first data. In the illustrated example, the first data is retrieved by sending a request for the first data (message 9-5) to the ADRF, or a corresponding function(s), by receiving (message 9-6) the first data from the ADRF. Then the training function determines in block 9-7 that additional data is needed to complement the first data, for example as described with block 203 of Fig. 2. In the illustrated example, the training function then generates in block 9-7 synthetic data that is needed to complement the first data and after that determines in block 9-7 the amount of the synthetic data that can be used based on the upper limit. In the illustrated example, there is more generated synthetic data than the amount that can be used, meaning that the ratio will exceed the upper limit. Therefore in the illustrated example, no model training is performed and a response (message 9-9) indicating a failure, for example, is transmitted from the training function to the analytics function. The response may be enhanced by an indication that due to the upper limit, the amount of synthetic data was limited, and hence no model was trained. However, in the illustrated example, the training function further causes storing the synthetic data with indication indicating that the data is synthetic by transmitting a request (message 9-8) to the ADRF, or a corresponding function(s).

Upon receiving the response (message 9-9), the analytics function transmits to the Xfunction a response (message 9-10) to the first request, the response containing, for example, an indication of a failure, or that no analytics is available. The indication may be enhanced by the indication received that due to the upper limit, the amount of synthetic data was limited, and hence no model was trained.

The blocks, related functions, and information exchanges (messages, operations) described above by means of Fig. 2 to Fig. 9 in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Fig. 10 illustrates an apparatus 1001 according to some embodiments.

The apparatus 1001 may comprise one or more communication control circuitries 1020, such as at least one processor, and at least one memory 1030, including one or more algorithms 1031, such as a computer program code (software) wherein the at least one memory and the computer program code (software) are configured, with the at least one processor, to cause the apparatus to carry out any one of the exemplified functionalities of the consumer, or the producer, or the Xfunction, or the analytics function, or the training function, described above with any of Fig. 2 to Fig. 9. Said at least one memory 1030 may also comprise at least one database 1032.

According to an embodiment, there is provided an apparatus comprising at least one processor; and at least one memory including a computer program code, wherein the at least one memory and the computer program code are configured, with the at least one processor, to cause the apparatus to perform at least: receiving a request for a model training; retrieving first data for the model training; determining, whether additional data is needed to complement the first data; generating, upon determining that additional data is needed, synthetic data; obtaining training data by combining the synthetic data with the first data; determining a ratio of the synthetic data to the training data; performing the model training using the training data; and causing transmitting in a response to the request at least an indication of the ratio. The response may further comprise the model trained, for example.

According to an embodiment, there is provided an apparatus comprising at least one processor; and at least one memory including a computer program code, wherein the at least one memory and the computer program code are configured, with the at least one processor, to cause the apparatus to perform at least: receiving a first request for analytics with an analytics identifier; causing transmitting, upon a trained model for the analytics identifier not being available, a second request of model training; receiving a response to the second request, the response containing a model trained and an indication of a ratio of synthetic data used in training the model; generating analytics using the model trained; determining confidence scores; and causing transmitting a response to the first request, the response containing the analytics with data statistics comprising the indication of the ratio and the confidence scores.

According to an embodiment, there is provided an apparatus comprising at least one processor; and at least one memory including a computer program code, wherein the at least one memory and the computer program code are configured, with the at least one processor, to cause the apparatus to perform at least: causing transmitting a first request for analytics with an analytics identifier; receiving a response to the first request, the response containing the analytics with data statistics comprising an indication of a ratio of synthetic data used for obtaining the analytics and confidence scores; and determining, based at least on the indication of the ratio, whether or not to apply the analytics.

Referring to Fig. 10, the one or more communication control circuitries 1020 of the apparatus 1001 comprise at least a ratio circuitry 1021 which is configured to perform synthetic training data ratio related functionalities according to embodiments. To this end, the ratio circuitry 1021 of the apparatus 1001 is configured to carry out at least some of the functionalities described above, e.g., by means of Fig. 2 to Fig. 9, using one or more individual circuitries.

Referring to Fig. 10, the memory 1030 may be implemented using any suitable data storage technology, such as semiconductor based memory devices, flash memory, magnetic memory devices and systems, optical memory devices and systems, fixed memory and removable memory.

Referring to Fig. 10, the apparatus 1001 may further comprise different interfaces 1010 such as one or more communication interfaces (TX/RX) comprising hardware and/or software for realizing communication connectivity according to one or more communication protocols. The one or more communication interfaces 1010 may enable connecting to the internet and/or to a core network of a wireless communications network and/or to a radio access network. The one or more communication interface 1010 may provide the apparatus with communication capabilities to communicate in a cellular communication system and enable communication to different network nodes or elements. The one or more communication interfaces 1010 may comprise standard well-known components such as an amplifier, filter, frequency-converter, (de)modulator, and encoder/decoder circuitries, controlled by the corresponding controlling units, and possibly one or more antennas.

In an embodiment, as shown in Fig. 11, at least some of the functionalities of the apparatus of Fig. 10 may be shared between two physically separate devices, forming one operational entity. Therefore, the apparatus may be seen to depict the operational entity comprising one or more physically separate devices for executing at least some of the described processes. Thus, the apparatus of Fig. 11, utilizing such shared, or disaggregated, architecture, may comprise a control unit CU 1120, such as a host computer or a server computer, operatively coupled (e.g. via a wireless or wired network) to a distributed unit DU 1122 located in an edge apparatus, or an apparatus in another domain, for example. In an embodiment, at least some of the described processes may be performed by the CU 1120. In an embodiment, the execution of at least some of the described processes may be shared among the DU 1122 and the CU 1120.

Similar to Fig. 10, the apparatus of Fig. 11 may comprise one or more communication control circuitry (CNTL) 1020, such as at least one processor, and at least one memory (MEM) 1030, including one or more algorithms (PROG) 1031, such as a computer program code (software) wherein the at least one memory and the computer program code (software) are configured, with the at least one processor, to cause the apparatus to carry out any one of the exemplified functionalities described above.

In an embodiment, the CU 1120 may generate a virtual network through which the CU 1120 communicates with the DU 1122. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system.

In an embodiment, the virtual network may provide flexible distribution of operations between the DU and the CU. In practice, any digital signal processing task may be performed in either the DU or the CU and the boundary where the responsibility is shifted between the DU and the CU may be selected according to implementation.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 2 to Fig. 9 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 2 to Fig. 9 or operations thereof.

Embodiments as described may also be carried out in the form of a computer process defined by a computer program or portions thereof. Embodiments of the functionalities described in connection with Fig. 2 to Fig. 9 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising means for performing:
receiving a request for a model training;
retrieving first data for the model training;
determining, whether additional data is needed to complement the first data;
generating, upon determining that additional data is needed, synthetic data;
obtaining training data by combining the synthetic data with the first data;
determining a ratio of the synthetic data to the training data;
performing the model training using the training data; and
causing transmitting in a response to the request at least an indication of the ratio.

2. The apparatus of claim 1, wherein the means are further configured to determine whether the first data is imbalanced data, and in response to imbalanced data, determine that additional data is needed.

3. The apparatus of claim 1, wherein the means are further configured to determine whether the first data comprises sufficient amount of data for training, and in response to non-sufficient amount of data, determine that additional data is needed.

4. The apparatus of claim 1, wherein the means are further configured to perform:
receiving in the request an upper limit for the ratio; and
combining to the first data at most such an amount of synthetic data that the ratio does not exceed the upper limit.

5. The apparatus of claim 1, wherein the means are further configured to perform:
receiving in the request an upper limit for the ratio;
determining an amount of synthetic data needed;
comparing the ratio to the upper limit;
in response to the ratio exceeding the upper limit, performing the model training using the first data or not performing the model training; and
causing transmitting in the response an indication that the upper limit was not met.

6. The apparatus of claim 1, wherein the means are further configured to perform:
causing storing the synthetic data with indication indicating that the data is synthetic.

7. The apparatus of claim 1, wherein the means are further configured to perform:
causing storing the model with information indicating analytics for which the model may be used.

8. The apparatus of claim 1, wherein the means are further configured to perform:
causing storing the model trained with the indication of the ratio.

9. A computer-implemented method comprising:
receiving a request for a model training;
retrieving first data for the model training;
determining, whether additional data is needed to complement the first data;
generating, upon determining that additional data is needed, synthetic data;
obtaining training data by combining the synthetic data with the first data;
determining a ratio of the synthetic data to the training data;
performing the model training using the training data; and
causing transmitting in a response to the request at least an indication of the ratio.

10. A computer readable medium comprising program instructions stored thereon for at least one of a first functionality, a second functionality, or a third functionality, for performing corresponding functionality,
wherein the first functionality comprises at least:
causing transmitting a first request for analytics with an analytics identifier;
receiving a response to the first request, the response containing the analytics with data statistics comprising an indication of a ratio of synthetic data used for obtaining the analytics and confidence scores; and
determining, based at least on the indication of the ratio, whether or not to apply the analytics,
wherein the second functionality comprises at least:
receiving the first request for analytics with the analytics identifier; causing transmitting, upon a trained model for the analytics identifier not being available, a second request of model training;
receiving a response to the second request, the response containing a model trained and the indication of a ratio of synthetic data used in training the model;
generating the analytics using the model trained;
determining the confidence scores; and
causing transmitting the response to the first request, the response containing the analytics with the data statistics comprising the indication of the ratio and the confidence scores,
wherein the third functionality comprises at least:
receiving the second request for a model training;
retrieving first data for the model training;
determining, whether additional data is needed to complement the first data;
generating, upon determining that additional data is needed, synthetic data;
obtaining training data by combining the synthetic data with the first data;
determining the ratio of the synthetic data to the training data;
performing the model training using the training data; and
causing transmitting in the response to the second request at least an indication of the ratio.

11. The computer readable medium of claim 10, wherein the medium is a non-transitory computer readable medium.
